# EUROPEAN PATENT APPLICATION

(11) **EP 4 568 121 A1**
(43) Date of publication of application: **11.06.2025**
(21) Application number: 23853105.7
(22) Date of filing: 26.06.2023
(51) Int. Cl.: H04B 1/40, H04B 1/00, H04B 7/0404, G06F 1/16

(54) **ELECTRONIC DEVICE COMPRISING MULTIPLE ANTENNAS**

(30) Priority: 08.08.2022 KR 20220098767
(71) Applicant: Samsung Electronics Co., Ltd., Suwon-si, Gyeonggi-do 16677 (KR)
(72) Inventor: LEE, Kyungjae, Suwon-si Gyeonggi-do 16677 (KR); PARK, Sungkoo, Suwon-si Gyeonggi-do 16677 (KR); HWANG, Soonho, Suwon-si Gyeonggi-do 16677 (KR); KIM, Junwoo, Suwon-si Gyeonggi-do 16677 (KR); YUN, Himchan, Suwon-si Gyeonggi-do 16677 (KR); LEE, Sangha, Suwon-si Gyeonggi-do 16677 (KR); KIM, Seunghwan, Suwon-si Gyeonggi-do 16677 (KR); CHUN, Jaebong, Suwon-si Gyeonggi-do 16677 (KR)
(74) Representative: Gulde & Partner
(86) International application number: PCT/KR2023/095025
(87) International publication number: WO 2024/035240

(57) **Abstract**

An electronic device may comprise a first antenna. The electronic device may comprise a second antenna. The electronic device may comprise a third antenna. The electronic device may comprise a first radio frequency front end (RFFE) connected to the first antenna and including a duplexer that passes a first signal in a downlink frequency range of a first frequency band and a second signal in an uplink frequency range of the first frequency band. The electronic device may comprise a second RFFE connected to the second antenna and including a filter that passes the first signal. The electronic device may comprise a third RFFE connectable to the second antenna or the third antenna and including another duplexer that passes a third signal in a downlink frequency range of a second frequency band and a fourth signal in an uplink frequency range of the second frequency band. The electronic device may include a processor.

## Description

### [Technical Field]

The following description relates to an electronic device in a wireless environment including a plurality of antennas.

### [Background Art]

An electronic device may include a plurality of antennas and a plurality of radio frequency front end (RFFE) for wireless communication with an external electronic device. For example, each of the plurality of RFFE may include components for signals transmitted via each of the plurality of antennas and/or components for signals received via each of the plurality of antennas. For example, each of the plurality of RFFE may include a power amplifier (PA) for setting transmission power, a low noise amplifier (LNA) for amplifying signals received via each of the plurality of antennas, and/or at least one filter.

### [Disclosure]

### [Technical Solution]

An electronic device is provided. The electronic device may comprise a first antenna. The electronic device may comprise a second antenna. The electronic device may comprise a third antenna. The electronic device may comprise a first radio frequency front end (RFFE) connected to the first antenna, the first RFFE including a duplexer passing a first signal in a downlink frequency range of a first frequency band and a second signal in an uplink frequency range of the first frequency band. The electronic device may comprise a second RFFE connected to the second antenna, the second RFFE including a filter passing the first signal. The electronic device may comprise a third RFFE connectable to the second antenna or the third antenna, the third RFFE including another duplexer passing a third signal in a downlink frequency range of a second frequency band and a fourth signal in an uplink frequency range of the second frequency band. The electronic device may comprise a processor. The processor may be configured to connect the third RFFE to the second antenna from among the second antenna and the third antenna to transmit the fourth signal while the second signal is transmitted via the first antenna. The processor may be configured to, while the third RFFE is connected to the second antenna, identify a defined event. The processor may be configured to, based on the defined event, connect the third RFFE to the third antenna from among the second antenna and the third antenna to transmit the fourth signal while the second signal is transmitted.

An electronic device is provided. The electronic device may comprise a first antenna. The electronic device may comprise a second antenna. The electronic device may comprise a third antenna. The electronic device may comprise a first radio frequency front end (RFFE) connected to the first antenna, the first RFFE including a duplexer passing a first signal in a downlink frequency range of a first frequency band and a second signal in an uplink frequency range of the first frequency band. The electronic device may comprise a second RFFE connected to the second antenna, the second RFFE including a filter passing the first signal and a filter passing a third signal in a downlink frequency range of a second frequency band. The electronic device may comprise a third RFFE connectable to the second antenna or the third antenna, the third RFFE including a filter passing a fourth signal in an uplink frequency range of the second frequency band. The electronic device may comprise a processor. The processor may be configured to connect the third RFFE to the second antenna from among the second antenna and the third antenna to transmit the fourth signal while the second signal is transmitted via the first antenna. The processor may be configured to, while the third RFFE is connected to the second antenna, identify a defined event. The processor may be configured to, based on the defined event, connect the third RFFE to the third antenna from among the second antenna and the third antenna to transmit the fourth signal while the second signal is transmitted.

### [Description of the Drawings]

FIG. 1 is a simplified block diagram of an exemplary electronic device.
FIG. 2A is a chart illustrating a quality of a signal transmitted via each of antennas.
FIG. 2B is a chart illustrating efficiency of each of antennas according to frequency.
FIG. 3 illustrates an example of another switch included in an exemplary electronic device.
FIGS. 4 and 5 illustrate an example of a plurality of states of an exemplary electronic device.
FIGS. 6 and 7 illustrate an example of conductive portions and non-conductive portions included in a side surface of housings of an exemplary electronic device.
FIGS. 8 and 9 are a simplified block diagram of an exemplary electronic device including a radio frequency front end (RFFE) connectable to a second antenna or a third antenna.
FIGS. 10 and 11 are a simplified block diagram of an exemplary electronic device including an RFFE connectable to a first antenna or a third antenna.
FIG. 12 is a block diagram of an electronic device in a network environment according to various embodiments.

### [Mode for Invention]

In order to enhance throughput of wireless communication with an external electronic device, an electronic device may communicate with the external electronic device through a plurality of antennas. For example, the electronic device may include the plurality of antennas to support carrier aggregation (CA) and/or dual connectivity. For example, for a quality of a signal transmitted or received via an antenna of the plurality of antennas, the electronic device may release a connection between the antenna and a radio frequency front end (RFFE), and connect the RFFE to another antenna of the plurality of antennas.

The electronic device exemplified through the following descriptions may include the RFFE connectable to the antenna or the other antenna.

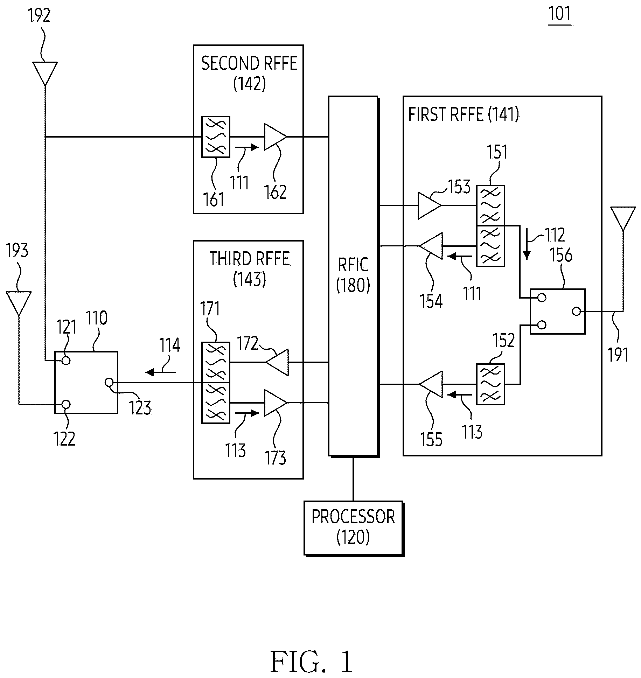

FIG. 1 is a simplified block diagram of an exemplary electronic device.

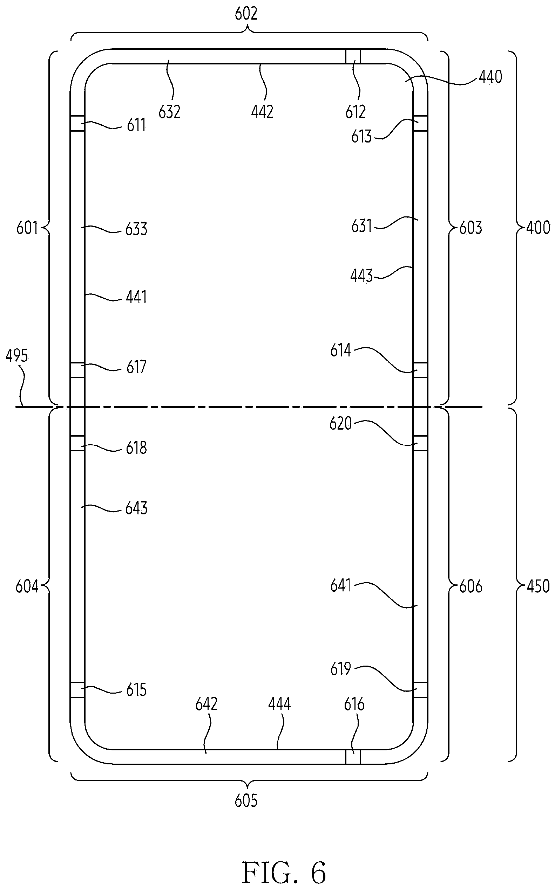

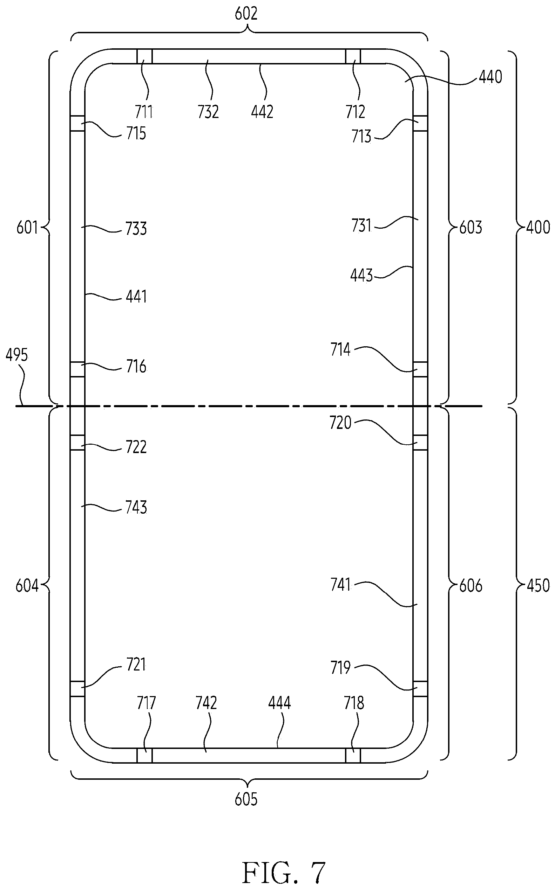

Referring to FIG. 1, an electronic device 101 may include a processor 120, a first RFFE 141, a second RFFE 142, a third RFFE 143, a radio frequency integrated circuit (RFIC) 180, a first antenna 191, a second antenna 192, and a third antenna 193. For example, a position of the first antenna 191, a position of the second antenna 192, and a position of the third antenna 193 may be different from each other. The position of the first antenna 191, the position of the second antenna 192, and the position of the third antenna 193 will be exemplified through FIGS. 6 and 7.

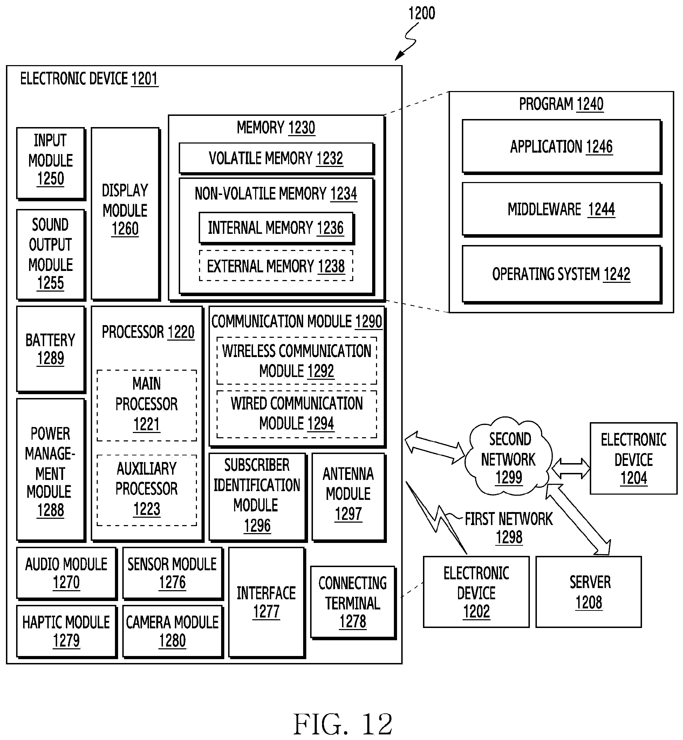

For example, the electronic device 101 may include at least a portion of an electronic device 1201 in FIG. 12 to be illustrated below. For example, the processor 120 may include at least a portion of a processor 1220 in FIG. 12 to be illustrated below. For example, each of the first RFFE 141, the second RFFE 142, the third RFFE 143, and the RFIC 180 may include at least a portion of a wireless communication module 1292 in FIG. 12 and/or at least a portion of an antenna module 1297 in FIG. 12. For example, each of the first antenna 191, the second antenna 192, and the third antenna 193 may include at least a portion of the antenna module 1297 in FIG. 12. However, it is not limited thereto.

For example, the processor 120 may communicate with an external electronic device by controlling the RFIC 180, the first RFFE 141, the second RFFE 142, the third RFFE 143, and/or a switch 110.

For example, the RFIC 180 may be used to obtain a signal to be transmitted via the first antenna 191, the second antenna 192, and/or the third antenna 193. For example, the RFIC 180 may include a transmit (Tx) chain including a digital analog converter (DAC) for digital-to-analog converting for a digital signal provided from the processor 120 and a mixer for up-converting an analog signal. For example, the RFIC 180 may be used to obtain a signal received via the first antenna 191, the second antenna 192, and/or the third antenna 193. For example, the RFIC 180 may include a receive (Rx) chain including a mixer for down-converting the signal and an analog digital converter (ADC) for analog-to-digital converting for the signal. For example, an analog signal obtained through the ADC may be provided to the processor 120.

For example, the first RFFE 141 may be connected to the first antenna 191.

For example, the first RFFE 141 may include a duplexer 151 that passes a first signal 111 within a downlink frequency range of a first frequency band and a second signal 112 within an uplink frequency range of the first frequency band. For example, the first frequency band may be B20 of long-term evolution (LTE) specification of 3rd generation partnership project (3GPP) or n20 of new radio (NR) specification of the 3GPP. For example, the downlink frequency range of the first frequency band may be about 791 megahertz (MHz) to about 820.9 MHz. For example, the uplink frequency range of the first frequency range may be about 832 MHz to about 861.9 MHz. For example, the duplexer 151 may be respectively connected to a power amplifier (PA) 153 for transmitting the second signal 112 and a low noise amplifier (LNA) 154 for receiving the first signal 111.

For example, the first RFFE 141 may further include a filter 152 that passes a third signal 113 within a downlink frequency range of a second frequency band. For example, the second frequency band may be B28 of the LTE specification of the 3GPP or n28 of the NR specification of the 3GPP. For example, the downlink frequency range of the second frequency band may be about 758 MHz to about 802.9 MHz. For example, the filter 152 may be connected to an LNA 155 for receiving the third signal 113.

For example, when the first RFFE 141 includes the filter 152, the first RFFE 141 may further include a switch 156 for electrically connecting the antenna 191 to one of the duplexer 151 and the filter 152. For example, the processor 120 may electrically connect, via the switch 156, the duplexer 151 to the antenna 191, or the filter 152 to the antenna 191.

For example, the second RFFE 142 may be connected to the second antenna 192.

For example, the second RFFE 142 may include a filter 161 that passes the first signal 111. For example, the filter 161 may be connected to an LNA 162 for receiving the first signal 111.

For example, the third RFFE 143 may be electrically connectable to the second antenna 192 or the third antenna 193.

For example, the third RFFE 143 may include another duplexer 171 that passes the third signal 113 and a fourth signal 114 within an uplink frequency range of the second frequency band. For example, the uplink frequency range of the second frequency band may be about 703 MHz to about 747.9 MHz. For example, the other duplexer 171 may be respectively connected to a PA 172 for transmitting the fourth signal 114 and an LNA 173 for receiving the third signal 113.

For example, the electronic device 101 may further include a switch 110 for an electrical connection between the third RFFE 143 and the second antenna 192, and for an electrical connection between the third RFFE 143 and the third antenna 193. For example, the switch 110 may include a first terminal 121 connected to the second antenna 192, a second terminal 122 connected to the third antenna 193, and a third terminal 123 connected to the third RFFE 143. For example, the switch 110 may have a plurality of states, including a first state electrically connecting the first terminal 121 and the third terminal 123 and a second state electrically connecting the second terminal 122 and the third terminal 123.

For example, the switch 110 may be located out of the first RFFE 141, the second RFFE 142, and the third RFFE 143. However, it is not limited thereto. For example, the switch 110 may be located in the third RFFE 143.

For example, the switch 110 may be replaced with at least one other component for electrically connecting the third RFFE 143 with the second antenna 192 or the third antenna 193.

For example, the processor 120 may electrically connect the third RFFE 143 to the second antenna 192 from among the second antenna 192 and the third antenna 193 to transmit the fourth signal 114 while the second signal 112 is transmitted via the first antenna 191. For example, the processor 120 may electrically connect the second antenna 192 and the third RFFE 143 while the first antenna 191 is electrically connected to the duplexer 151 via the switch 156. For example, the processor 120 may electrically connect the second antenna 192 and the third RFFE 143 via the switch 110. For example, the processor 120 may electrically connect the second antenna 192 and the third RFFE, 143 based on setting a state of the switch 110 to the first state.

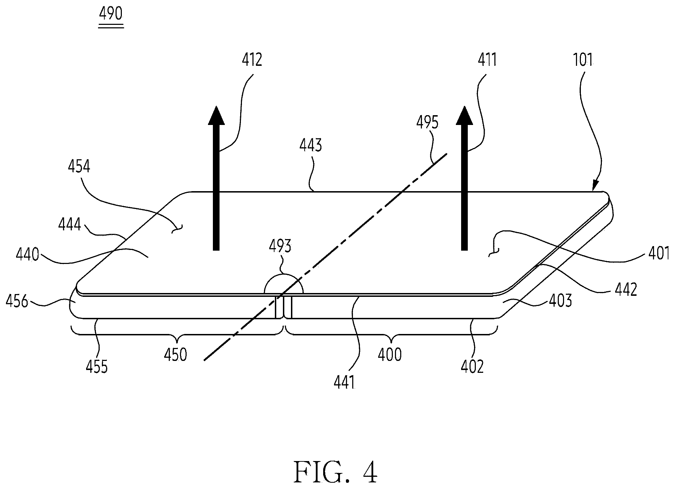

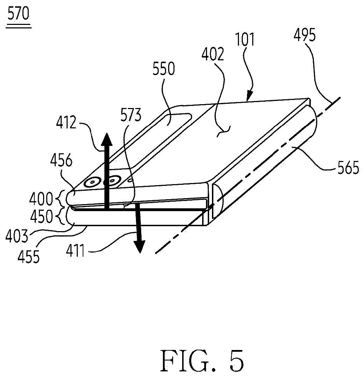

For example, the processor 120 may identify a defined event while the third RFFE 143 is electrically connected to the second antenna 192. For example, the defined event may be specified to identify whether to connect the third RFFE 143 to the second antenna 192 or to the third antenna 193. For example, the defined event may include identifying that a quality of at least one signal (e.g., first signal 111, third signal 113, and/or fourth signal 114) related to the second antenna 192 is less than a reference quality. For example, the defined event may include estimating that a quality of the at least one signal will be changed to less than the reference quality. For example, the defined event may include a change in a state of the electronic device 101 to be exemplified through FIGS. 4 and 5. For example, the defined event may include identifying an external object (e.g., at least a portion (e.g., head and/or hand) of the user's body) located within a defined distance from the electronic device 101. For example, the defined event may include a correspondence between data indicating a change in a posture of the electronic device 101 and reference data. However, it is not limited thereto.

For example, the processor 120 may electrically connect the third RFFE 143 to the third antenna 193 from among the second antenna 192 and the third antenna 193 to transmit the fourth signal 114 while the second signal 112 is transmitted, based on the defined event. For example, the processor 120 may electrically connect the third antenna 193 and the third RFFE 143 while the first antenna 191 is electrically connected to the duplexer 151 via the switch 156. For example, the processor 120 may change an antenna electrically connected to the third RFFE 143 from the second antenna 192 to the third antenna 193 via the switch 110. For example, the processor 120 may electrically connect the third antenna 193 and the third RFFE 143, based on changing the state of the switch 110 from the first state to the second state.

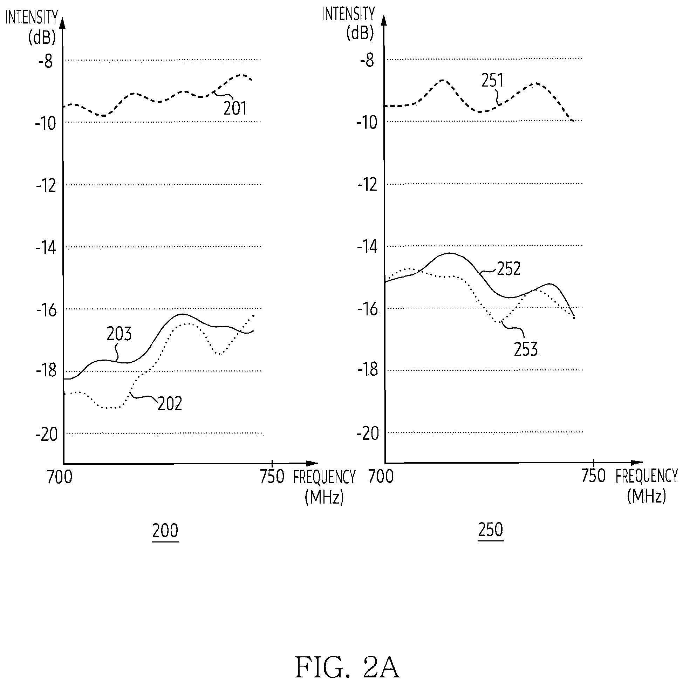

For example, the electronic device 101 may enhance a quality of the first signal 111, a quality of the third signal 113, or a quality of the fourth signal 114 by changing the antenna electrically connected to the third RFFE 143 from the second antenna 192 to the third antenna 193. The enhancement of the quality of the first signal 111, the quality of the third signal 113, or the quality of the fourth signal 114 by changing the antenna electrically connected to the third RFFE 143 may be exemplified through FIG. 2A.

FIG. 2A is a chart illustrating a quality of a signal transmitted via each of antennas.

Referring to FIG. 2A, a chart 200 may indicate the intensity of a fourth signal 114 transmitted via a second antenna 192, and a chart 250 may indicate the intensity of the fourth signal 114 transmitted via a third antenna 193. For example, a horizontal axis of the chart 200 may indicate a frequency, and a vertical axis of the chart 200 may indicate the intensity of a signal. For example, a horizontal axis of the chart 250 may indicate a frequency, and a vertical axis of the chart 250 may indicate the intensity of a signal.

In the chart 200, a line 201 may indicate the intensity of the fourth signal 114, transmitted via the second antenna 192 within a first state in which the electronic device 101 is spaced more than a certain distance from an external object (e.g., the user's hand and/or face). For example, the line 201 may indicate the intensity of the fourth signal 114 transmitted via the second antenna 192 in a state where there is no interference by an external object. For example, as indicated by the line 201, the intensity of the fourth signal 114 may be about -10 decibel (dB) to about -8 dB.

In the chart 200, each of a line 202 and a line 203 may indicate the intensity of the fourth signal 114 transmitted via the second antenna 192 within a second state in which the electronic device 101 is located within a certain distance from the external object. For example, each of the line 202 and the line 203 may indicate the intensity of the fourth signal 114 transmitted via the second antenna 192 in a state that the electronic device 101 is gripped by the user's left or right hand. For example, as indicated by each of the line 202 (e.g., a state in which the electronic device 101 is gripped by the right hand) and the line 203 (e.g., a state in which the electronic device 101 is gripped by the left hand), the intensity of the fourth signal 114 may be about -20 dB to about - 16 dB. For example, the intensity of the fourth signal 114 transmitted via the second antenna 192 within the second state may be less than the intensity of the fourth signal 114 transmitted via the second antenna 192 within the first state. For example, a quality of the fourth signal 114 transmitted via the second antenna 192 in the second state may be reduced.

In the chart 250, the line 251 may indicate the intensity of the fourth signal 114 transmitted via the third antenna 193 in the first state. For example, as indicated by the line 251, the intensity of the fourth signal 114 may be about -10 dB to about -8 dB.

In the chart 250, each of a line 252 and a line 253 may indicate the intensity of the fourth signal 114 transmitted via the third antenna 193 in the second state. For example, as indicated by each of the line 252 and the line 253, the intensity of the fourth signal 114 may be about -17 dB to about -14 dB. For example, the intensity of the fourth signal 114 transmitted via the third antenna 193 in the second state may be less than the intensity of the fourth signal 114 transmitted via the third antenna 193 in the first state, but the intensity of the fourth signal 114 transmitted via the third antenna 193 in the second state may be greater than the intensity of the fourth signal 114 transmitted via the second antenna 192 in the second state. For example, the electronic device 101 may enhance a quality of the fourth signal 114 by changing the antenna connected to the third RFFE 143 from the second antenna 192 to the third antenna 193, in response to the defined event including contact of the external object on the electronic device 101.

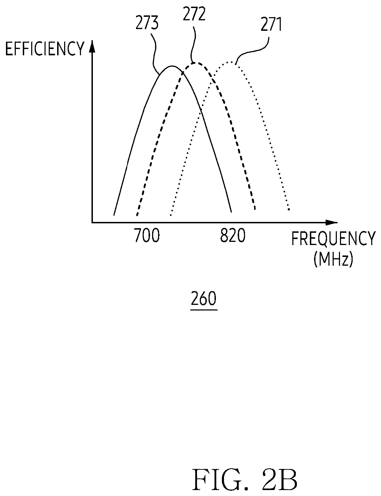

Referring back to FIG. 1, the electronic device 101 according to an embodiment may support a wider frequency range by further including the third antenna 193 as well as the first antenna 191 and the second antenna 192. A frequency range supported by the first antenna 191, the second antenna 192, and the third antenna 193 may be exemplified through FIG. 2B.

FIG. 2B is a chart illustrating efficiency of each of antennas according to frequency.

Referring to FIG. 2B, a horizontal axis of a chart 260 may indicate a frequency, and a vertical axis of the chart 260 may indicate efficiency. For example, a line 271 in the chart 260 may indicate efficiency of the first antenna 191 according to frequency, a line 272 in the chart 260 may indicate efficiency of the second antenna 192 according to frequency, and a line 273 in the chart 260 may indicate efficiency of the third antenna 193 according to frequency. For example, as indicated by line 271, line 272, and line 273, the electronic device 101 may support a wider frequency range via the first antenna 191, the second antenna 192, and the third antenna 193. For example, the electronic device 101 may provide an enhanced communication quality by using the first antenna 191, the second antenna 192, and/or the third antenna 193 for communication on the first frequency band and the second frequency band.

Referring back to FIG. 1, in an embodiment, while the third RFFE 143 is connected to the third antenna 193, the processor 120 may receive the first signal 111 via the first antenna 191 connected to the first RFFE 141 and receive the first signal 111 via the second antenna 192 connected to the second RFFE 142. For example, the processor 120 may receive the first signal 111 via the first antenna 191 electrically connected to the first RFFE 141 while the third RFFE 143 is electrically connected to the second antenna 192. For example, the electronic device 101 may enhance a reception quality of the first signal 111 through an electrical connection between the third RFFE 143 and the third antenna 193.

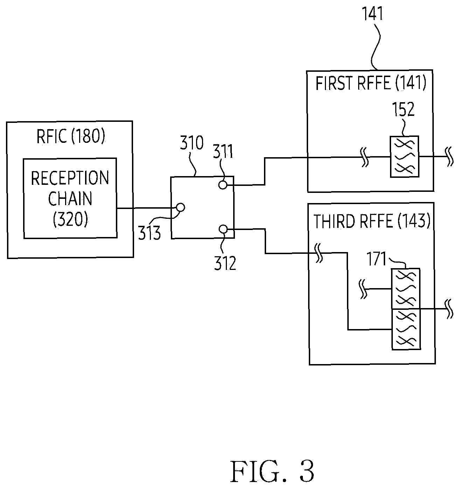

Although not illustrated in FIG. 1, the electronic device 101 may further include another switch for adaptively providing a connection between the RFIC 180 and the first RFFE 141 or the third RFFE 143. The other switch may be exemplified through FIG. 3.

FIG. 3 illustrates an example of another switch included in an exemplary electronic device.

Referring to FIG. 3, an electronic device 101 may include another switch 310. For example, the other switch 310 may include a first terminal 311 connected to a first RFFE 141 (or a filter 152 of the first RFFE 141), a second terminal 312 connected to a third RFFE 143 (or another duplexer 171 of the third RFFE 143) and a third terminal 313 connected to an RFIC 180 (or a reception chain 320 of the RFIC 180). For example, the other switch 310 may be located out of the RFIC 180. However, it is not limited thereto. For example, the other switch 310 may be located within the RFIC 180, unlike the illustration of FIG. 3.

For example, the other switch 310 may have a plurality of states, including a first state electrically connecting the third terminal 313 to the first terminal 311 from among the first terminal 311 and the second terminal 312, and a second state electrically connecting the third terminal 313 to the second terminal 312 from among the first terminal 311 and the second terminal 312. For example, the reception chain 320 in the RFIC 180 may be a reception chain used to obtain a third signal 113.

For example, the processor 120 may set a state of the other switch 310 to the first state while the state of the switch 110 is the first state. For example, the processor 120 may set a state of the other switch 310 to the second state while the state of the switch 110 is the second state.

Referring back to FIG. 1, the electronic device 101 may include a flexible display (or a foldable display). For example, the electronic device 101 may provide a plurality of states through the flexible display. The plurality of states may be exemplified through FIGS. 4 and 5.

FIGS. 4 and 5 illustrate an example of a plurality of states of an exemplary electronic device.

Referring to FIGS. 4 and 5, an electronic device 101 may include a first housing 400 and a second housing 450.

For example, the first housing 400 may include a first surface 401, a second surface 402 opposite the first surface 401, and a third surface 403 between the first surface 401 and the second surface 402. For example, the third surface 403 may be referred to as a side surface.

For example, the second housing 450 may include a fourth surface 454, a fifth surface 455 opposite the fourth surface 454, and a sixth surface 456 between the fourth surface 454 and the fifth surface 455. For example, the sixth surface 456 may be referred to as a side surface.

Although not illustrated in FIGS. 4 and 5, the electronic device 101 may include a hinge structure. For example, the hinge structure may be used to change an angle between the first housing 400 and the second housing 450 based on an axis 495 (or reference axis 495). For example, the first housing 400 may be rotated with respect to the second housing 450 through the hinge structure. For example, the second housing 450 may be rotated with respect to the first housing 400 through the hinge structure. For example, at least a portion of the hinge structure may be included in the hinge housing 565 of the electronic device 101 illustrated in FIG. 5.

For example, the electronic device 101 may include a flexible display 440. For example, the flexible display 440 may be disposed on the first surface 401 and the fourth surface 454 across the hinge structure. For example, the flexible display 440 may include a display area including a first periphery 441 perpendicular to the axis 495, a second periphery 442 extending from an end of the first periphery 441 and parallel to the axis 495, a third periphery 443, extending from an end of the second periphery 442, perpendicular to the axis 495, and parallel to the first periphery 441, and a fourth periphery 444, extending from an end of the third periphery 443 to another end of the first periphery 441 and parallel to the axis 495.

For example, the electronic device 101 may further include a display 550 (illustrated in FIG. 5) included in the second surface 402 of the first housing 400 or exposed through at least a portion of the second surface 402.

For example, the electronic device 101 may provide a state 490 as a state among the plurality of states. For example, the state 490 may indicate a state in which a first direction 411 in which the first surface 401 faces is substantially the same as a second direction 412 in which the fourth surface 454 faces. For example, the state 490 may indicate a state in which an angle 493 between the first surface 401 and the fourth surface 454 is about 180 degrees.

For example, the electronic device 101 may provide a state 570 as another state among the plurality of states. For example, the state 570 may indicate a state in which the first direction 411 is substantially opposite to the second direction 412. For example, the state 570 may indicate a state in which an angle 573 between the first surface 401 and the fourth surface 454 is about 0 degrees.

Although not illustrated in FIGS. 4 and 5, the electronic device 101 may provide an intermediate state between the state 490 and the state 570. For example, the intermediate state may include a state in which the angle 573 between the first surface 401 and the fourth surface 454 is an angle between about 0 and about 180 degrees. For example, the intermediate state may include a state in which the first direction 411 is perpendicular to the second direction 412. However, it is not limited thereto.

Referring back to FIG. 1, the first antenna 191, the second antenna 192, and the third antenna 193 may be provided at different positions through at least a portion of the third surface 403 of the first housing 400 and/or at least a portion of the sixth surface 456 of the second housing 450. A position of the first antenna 191, a position of the second antenna 192, and a position of the third antenna 193 may be exemplified through FIGS. 6 and 7.

FIGS. 6 and 7 illustrate an example of conductive portions and non-conductive portions included in a side surface of housings of an exemplary electronic device.

Referring to FIG. 6, a third surface 403 may include a first area 601, a second area 602, and a third area 603. For example, the first area 601 may be disposed along a portion of a first periphery 441. For example, the first area 601 may include a first non-conductive portion 611. For example, the first area 601 may further include a seventh non-conductive portion 617 spaced apart from the first non-conductive portion 611. For example, the second area 602 may be disposed along a second periphery 442. For example, the second area 602 may include a second non-conductive portion 612. For example, the third area 603 may be disposed along a portion of a third periphery 443. For example, the third area 603 may include a third non-conductive portion 613 and a fourth non-conductive portion 614 spaced apart from the third non-conductive portion 613.

For example, a sixth surface 456 may include a fourth area 604, a fifth area 605, and a sixth area 606. For example, the fourth area 604 may be disposed along another portion of the first periphery 441. For example, the fourth area 604 may include a fifth non-conductive portion 615. For example, the fourth area 604 may further include an eighth non-conductive portion 618 spaced apart from the fifth non-conductive portion 615. For example, the fifth area 605 may be disposed along the fourth periphery 444. For example, the fifth area 605 may include a sixth non-conductive portion 616. For example, the sixth area 606 may be disposed along another portion of the third periphery 443. For example, the sixth area 606 may include a ninth non-conductive portion 619 and a tenth non-conductive portion 620.

For example, the first non-conductive portion 611 and the fifth non-conductive portion 615 may be symmetrical with respect to an axis 495. For example, the second non-conductive portion 612 and the sixth non-conductive portion 616 may be symmetrical with respect to the axis 495. For example, since the electronic device 101 may provide a state 570, the first non-conductive portion 611 and the fifth non-conductive portion 615 may be symmetrical with respect to the axis 495, and the second non-conductive portion 612 and the sixth non-conductive portion 616 may be symmetrical with respect to the axis 495.

For example, the third surface 403 may include a conductive portion 631 extending from the third non-conductive portion 613 to the fourth non-conductive portion 614, a conductive portion 632 extending from the first non-conductive portion 611 to the second non-conductive portion 612, and a conductive portion 633 extending from the first non-conductive portion 611 to the seventh non-conductive portion 617.

For example, the sixth surface 456 may include a conductive portion 641 extending from the ninth non-conductive portion 619 to the tenth non-conductive portion 620, a conductive portion 642 extending from the fifth non-conductive portion 615 to the sixth non-conductive portion 616, and a conductive portion 643 extending from the fifth non-conductive portion 615 to the eighth non-conductive portion 618.

For example, the conductive portion 642 may be used as the first antenna 191. For example, the conductive portion 631 may be used as the second antenna 192. For example, the conductive portion 632 may be used as the third antenna 193. For example, unlike the conductive portion 642 used as the first antenna 191, the conductive portion 632 used as the third antenna 193 may be included in the first housing 640 together with the conductive portion 631 used as the second antenna 192.

For example, a size of each of the conductive portion 642 used as the first antenna 191 and the conductive portion 632 used as the third antenna 193 may be larger than a size of each of a conductive portion 742 in FIG. 7 used as the first antenna 191 and a conductive portion 732 in FIG. 7 used as the third antenna 193. For example, since the size of each of the conductive portion 642 and the conductive portion 632 is larger than that of the conductive portion 742 in FIG. 7 and the conductive portion 732 in FIG. 7, a gain of each of the first antenna 191 provided through the conductive portion 642 and the third antenna 193 provided through the conductive portion 632 may be greater than a gain of each of the first antenna 191 provided through the conductive portion 742 in FIG. 7 and the third antenna 193 provided through the conductive portion 732 in FIG. 7.

Referring to FIG. 7, the third surface 403 may include the first area 601, the second area 602, and the third area 603. For example, the first area 601 may be disposed along a portion of the first periphery 441. For example, the first area 601 may include a non-conductive portion 715 and a non-conductive portion 716 spaced apart from the non-conductive portion 715. For example, the second area 602 may be disposed along the second periphery 442. For example, the second area 602 may include a non-conductive portion 711 and a non-conductive portion 712 spaced apart from the non-conductive portion 711. For example, the third area 603 may be disposed along a portion of the third periphery 443. For example, the third area 603 may include a non-conductive portion 713 and a non-conductive portion 714 spaced apart from the non-conductive portion 713.

For example, the sixth surface 456 may include the fourth area 604, the fifth area 605, and the sixth area 606. For example, the fourth area 604 may be disposed along another portion of the first periphery 441. For example, the fourth area 604 may include a non-conductive portion 721 and a non-conductive portion 722 spaced apart from the non-conductive portion 721. For example, the fifth area 605 may be disposed along the fourth periphery 444. For example, the fifth area 605 may include a non-conductive portion 717 and a non-conductive portion 718 spaced apart from the non-conductive portion 717. For example, the sixth area 606 may be disposed along another portion of the third periphery 443. For example, the sixth area 606 may include a non-conductive portion 719 and a non-conductive portion 720 spaced apart from the non-conductive portion 719.

For example, the non-conductive portion 711 and the non-conductive portion 717 may be symmetrical with respect to the axis 495. For example, the non-conductive portion 712 and the non-conductive portion 718 may be symmetrical with respect to the axis 495. For example, since the electronic device 101 may provide a state 570, the non-conductive portion 711 and the non-conductive portion 717 may be symmetrical with respect to the axis 495, and the non-conductive portion 712 and the non-conductive portion 716 may be symmetrical with respect to the axis 495.

For example, the third surface 403 may include a conductive portion 731 extending from the non-conductive portion 713 to the non-conductive portion 714, a conductive portion 732 extending from the non-conductive portion 711 to the non-conductive portion 712, and a conductive portion 733 extending from the non-conductive portion 715 to the non-conductive portion 716.

For example, the sixth surface 456 may include a conductive portion 741 extending from the non-conductive portion 719 to the non-conductive portion 720, a conductive portion 742 extending from the non-conductive portion 717 to the non-conductive portion 718, and a conductive portion 743 extending from the non-conductive portion 721 to the non-conductive portion 722.

For example, the conductive portion 742 may be used as the first antenna 191. For example, the conductive portion 731 may be used as the second antenna 192. For example, the conductive portion 732 may be used as the third antenna 193. For example, unlike the conductive portion 742 in the second housing 450 used as the first antenna 191, the conductive portion 732 used as the third antenna 193 may be included in the first housing 400 together with the conductive portion 731 used as the second antenna 192.

As described above, since the electronic device 101 includes not only the first antenna 191 and the second antenna 192 but also the third antenna 193 with respect to the first frequency band and the second frequency band, the electronic device 101 may secure a wider frequency range than an electronic device including two antennas with respect to the first frequency band and the second frequency band. For example, since the electronic device 101 selectively connects the third RFFE 143 to the second antenna 192 or the third antenna 193, the electronic device 101 may provide a communication service that is robust against a change in the environment including the electronic device 101.

The electronic device 101, which includes three antennas for supporting the first frequency band and the second frequency band, may be configured differently from the above examples. The electronic device 101, which is at least partially different from the electronic device 101 described above, will be exemplified below. Descriptions of components performing a function identical or similar to those described above will be omitted.

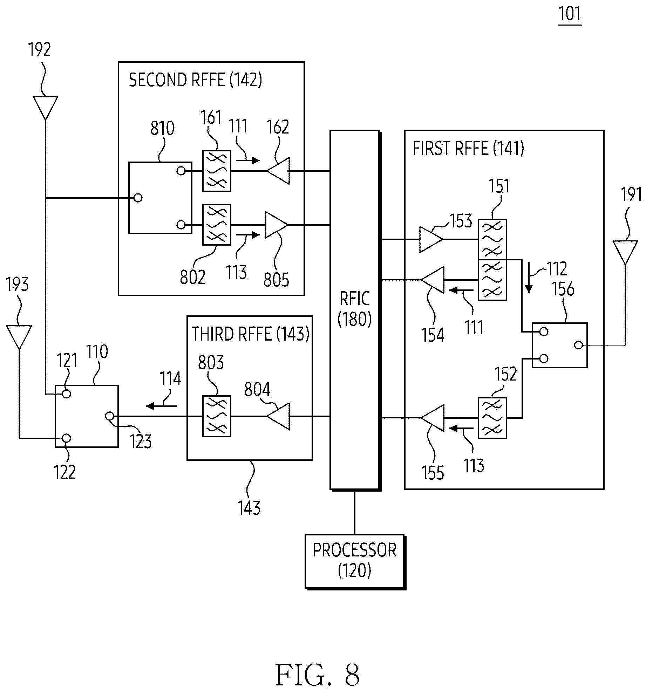

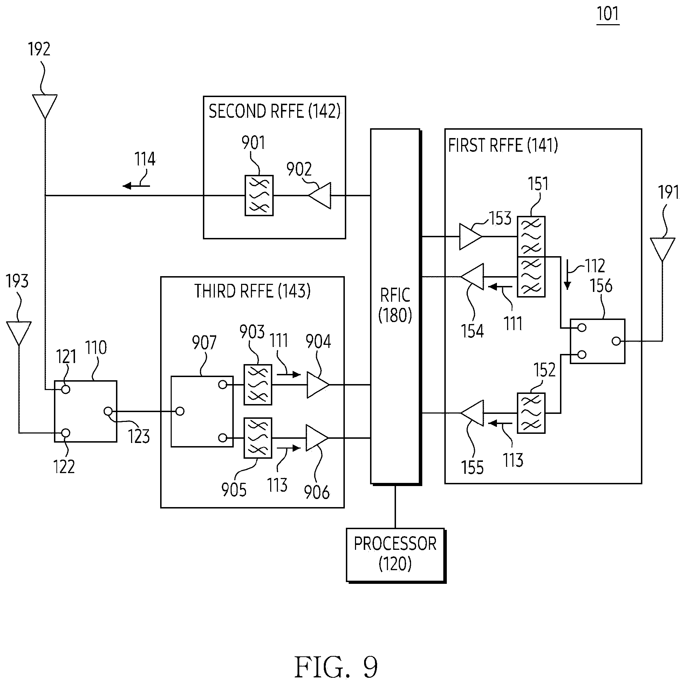

FIGS. 8 and 9 are a simplified block diagram of an exemplary electronic device including a radio frequency front end (RFFE) connectable to a second antenna or a third antenna.

Referring to FIG. 8, a second RFEE 142 of an electronic device 101 may be connected to a second antenna 192. For example, the second RFFE 142 may include a filter 161 passing a first signal 111 and a filter 802 passing a third signal 113. For example, the filter 161 may be connected to an LNA 162 for receiving the first signal 111. For example, the filter 802 may be connected to an LNA 805 for receiving the third signal.

For example, the second RFFE 142 may further include a switch 810. For example, the processor 120 may electrically connect, via the switch 810, the filter 161 to the second antenna 192, or the filter 802 to the second antenna 192.

For example, the third RFFE 143 may be connectable to the second antenna 192 or the third antenna 193. For example, the third RFFE 143 may be electrically connected to the second antenna 192 or the third antenna 193 via the switch 110. For example, the third RFFE 143 may include a filter 803 passing a fourth signal 114. For example, the filter 803 may be connected to a PA 804 for transmission of the fourth signal 114.

For example, the processor 120 may electrically connect the third RFFE 143 to the second antenna 192 from among the second antenna 192 and the third antenna 193 to transmit the fourth signal 114 while the second signal 112 is transmitted via the first antenna 191. For example, the processor 120 may electrically connect the second antenna 192 to the third RFFE 143 while the first antenna 191 is electrically connected to the duplexer 151 via the switch 156. For example, the processor 120 may electrically connect the second antenna 192 to the third RFFE 143 via the switch 110. For example, the processor 120 may connect the second antenna 192 and the third RFFE 143 based on setting a state of the switch 110 to the first state exemplified by the description of FIG. 1.

For example, the processor 120 may identify the defined event while the third RFFE 143 is connected to the second antenna 192.

For example, the processor 120 may electrically connect the third RFFE 143 to the third from among the second antenna 192 and the third antenna 193 to transmit the fourth signal 114 while the second signal 112 is transmitted, based on the defined event. For example, the processor 120 may change an antenna electrically connected to the third RFFE 143 from the second antenna 192 to the third antenna 193, via the switch 110. For example, the processor 120 may electrically connect the third RFFE 143 to the third antenna 193, based on changing a state of the switch 110 from the first state to the second state.

For example, the processor 120 may receive the first signal 111 via the second antenna 192 connected to the second RFFE 192 while the third RFFE 143 is electrically connected to the third antenna 193. For example, the first signal 111 may be received via a connection between the filter 161 and the second antenna 192 that is formed or provided using the switch 810.

For example, the first antenna 191 may include a conductive portion 642, the second antenna 192 may include a conductive portion 631, and the third antenna 193 may include a conductive portion 632.

For example, the first antenna 191 may include a conductive portion 742, the second antenna 192 may include a conductive portion 731, and the third antenna 193 may include a conductive portion 732.

Referring to FIG. 9, the second RFFE 142 of the electronic device 101 may be connected to the second antenna 192. For example, the second RFFE 142 may include a filter 901 passing the fourth signal 114. For example, the filter 901 may be connected to a PA 902 for transmission of the fourth signal 114.

For example, the third RFFE 143 may be connectable to the second antenna 192 or the third antenna 193. For example, the third RFFE 143 may be electrically connected to the second antenna 192 or the third antenna 193, via the switch 110. For example, the third RFFE 143 may include a filter 903 passing the first signal 111 and a filter 905 passing the third signal 113. For example, the filter 903 and the filter 905 may be connected to the LNA 904 and the LNA 906 for reception of each of the first signal 111 and the third signal 113.

For example, the third RFFE 143 may further include a switch 907. For example, the processor 120 may electrically connect, via the switch 907 and the switch 110, the filter 903 to the third antenna 193, or the filter 905 to the third antenna 193.

For example, the processor 120 may electrically connect the third RFFE 143 to the second antenna 192 from among the second antenna 192 and the third antenna 193 to receive the first signal 111 or the third signal 113, while the first signal 111 is received via the first antenna 191 or the second signal 112 is transmitted via the first antenna 191. For example, the processor 120 may electrically connect the second antenna 192 and the third RFFE 143 while the first antenna 191 is electrically connected to the duplexer 151 through the switch 156. For example, the processor 120 may electrically connect the second antenna 192 and the third RFFE 143 via the switch 110. For example, the processor 120 may electrically connect the second antenna 192 and the third RFFE 143 based on setting a state of the switch 110 to the first state.

For example, the processor 120 may identify the defined event while the third RFFE 143 is electrically connected to the second antenna 192.

For example, the processor 120 may electrically connect the third RFFE 143 to the third antenna 193 from among the second antenna 192 and the third antenna 193 based on the defined event. For example, the processor 120 may change an antenna electrically connected to the third RFFE 143 via the switch 110 from the second antenna 192 to the third antenna 193. For example, the processor 120 may electrically connect the third antenna 193 and the third RFFE 143, based on changing a state of the switch 110 from the first state to the second state.

For example, the processor 120 may electrically connect the third RFFE 143 to the third antenna 193 to receive the first signal 111, while the fourth signal 114 is transmitted via the second antenna 192 connected to the second RFFE 142.

For example, the first antenna 191 may include a conductive portion 642, the second antenna 192 may include a conductive portion 631, and the third antenna 193 may include a conductive portion 632.

For example, the first antenna 191 may include a conductive portion 742, the second antenna 192 may include a conductive portion 731, and the third antenna 193 may include a conductive portion 732.

The above descriptions describe an example in which the third RFFE 143 is electrically connectable to the second antenna 192 or the third antenna 193, but the third RFFE 143 may be electrically connected to the first antenna 191 or the third antenna 193. The electronic device 101 including the third RFFE 143 electrically connectable to the first antenna 191 or the third antenna 193 will be illustrated below. Descriptions of components performing a function identical or similar to those described above will be omitted.

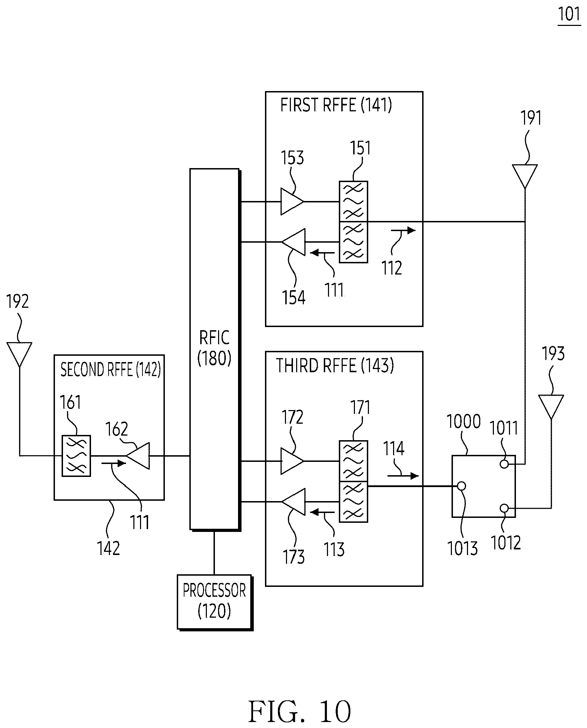

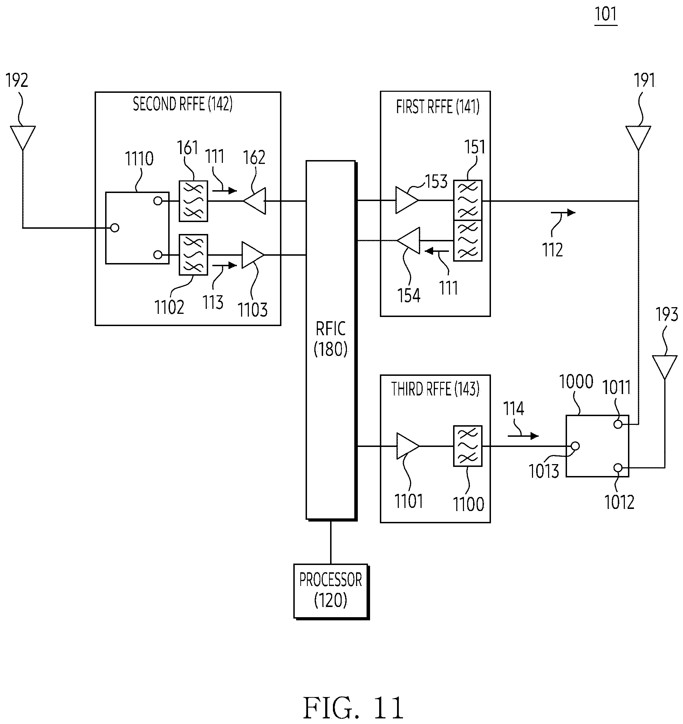

FIGS. 10 and 11 are a simplified block diagram of an exemplary electronic device including an RFFE connectable to a first antenna or a third antenna.

Referring to FIG. 10, a third RFFE 143 of an electronic device 101 may be electrically connected to the first antenna 191 or the third antenna 193. For example, the third RFFE 143 may be electrically connected to a first antenna 191 or to a third antenna 193, via a switch 1000. For example, the switch 1000 may include a first terminal 1011 connected to a first antenna 191, a second terminal 1012 connected to a third antenna 193, and a third terminal 1013 connected to the third RFFE. For example, the switch 1000 may have a plurality of states including a first state electrically connecting the first terminal 1011 and the third terminal 1013 and a second state electrically connecting the second terminal 1012 and the third terminal 1013.

For example, the switch 1000 may be located out of a first RFFE 141, a second RFFE 142, and the third RFFE 143. However, it is not limited thereto.

For example, the processor 120 may electrically connect the third RFFE 143 and the first antenna 191 based on setting a state of the switch 1000 to the first state. For example, the processor 120 may identify the defined event while the third RFFE 143 is electrically connected to the first antenna 191. For example, the processor 120 may change the state of the switch 1000 from the first state to the second state based on the defined event. For example, the processor 120 may electrically connect the third RFFE 143 to the third antenna 193 from among the first antenna 191 and the third antenna 193, based on the defined event. For example, the processor 120 may change an antenna electrically connected to the third RFFE 143 via the switch 1000 from the first antenna 191 to the third antenna 193, based on identifying a decrease in a quality of the third signal 113 received via the first antenna 191 and/or a quality of the fourth signal 114 transmitted via the first antenna 191.

For example, the first antenna 191 may include a conductive portion 642, the second antenna 192 may include a conductive portion 631, and the third antenna 193 may include a conductive portion 641. For example, the conductive portion 641 used as the third antenna 193 may be closer to the conductive portion 642 used as the first antenna 191 than the conductive portion 631 used as the second antenna 192.

For example, the first antenna 191 may include a conductive portion 742, the second antenna 192 may include a conductive portion 731, and the third antenna 193 may include a conductive portion 741. For example, the conductive portion 741 used as the third antenna 193 may be closer to the conductive portion 742 used as the first antenna 191 than to the conductive portion 731 used as the second antenna 192.

Referring to FIG. 11, the third RFFE 143 of the electronic device 101 may be electrically connected to the first antenna 191 or the third antenna 193. For example, the third RFFE 143 may include a filter 1100 passing the fourth signal 114. For example, the filter 1100 may be connected to a PA 1101 for transmission of the fourth signal 114.

For example, the second RFFE 142 may be connected to the second antenna 192. For example, the second RFFE 142 may include a filter 161 passing the first signal 111 and a PA 162 connected to the filter 161. For example, the second RFFE 142 may include a filter 1102 passing the third signal 113 and an LNA 1103 connected to the filter 1102. For example, the second antenna 192 may be electrically connected to the filter 161 or the filter 1102, via the switch 1100.

For example, the processor 120 may electrically connect the third RFFE 143 and the first antenna 191 based on setting a state of the switch 1000 to the first state. For example, the processor 120 may identify the defined event while the third RFFE 143 is electrically connected to the first antenna 191. For example, the processor 120 may change the state of the switch 1000 from the first state to the second state based on the defined event. For example, the processor 120 may electrically connect the third RFFE 143 to the third antenna 193 from among the first antenna 191 and the third antenna 193, based on the defined event. For example, the processor 120 may change an antenna electrically connected to the third RFFE 143 via the switch 1000 from the first antenna 191 to the third antenna 193, based on identifying a decrease in a quality of the fourth signal 114 transmitted via the first antenna 191.

For example, the first antenna 191 may include a conductive portion 642, the second antenna 192 may include a conductive portion 631, and the third antenna 193 may include a conductive portion 641. For example, the conductive portion 641 used as the third antenna 193 may be closer to the conductive portion 642 used as the first antenna 191 than the conductive portion 631 used as the second antenna 192.

For example, the first antenna 191 may include a conductive portion 742, the second antenna 192 may include a conductive portion 731, and the third antenna 193 may include a conductive portion 741. For example, the conductive portion 741 used as the third antenna 193 may be closer to the conductive portion 742 used as the first antenna 191 than the conductive portion 731 used as the second antenna 192.

FIG. 12 is a block diagram illustrating an electronic device 1201 in a network environment 1200 according to various embodiments.

Referring to FIG. 12, the electronic device 1201 in the network environment 1200 may communicate with an electronic device 1202 via a first network 1298 (e.g., a short-range wireless communication network), or at least one of an electronic device 1204 or a server 1208 via a second network 1299 (e.g., a long-range wireless communication network). According to an embodiment, the electronic device 1201 may communicate with the electronic device 1204 via the server 1208. According to an embodiment, the electronic device 1201 may include a processor 1220, memory 1230, an input module 1250, a sound output module 1255, a display module 1260, an audio module 1270, a sensor module 1276, an interface 1277, a connecting terminal 1278, a haptic module 1279, a camera module 1280, a power management module 1288, a battery 1289, a communication module 1290, a subscriber identification module(SIM) 1296, or an antenna module 1297. In some embodiments, at least one of the components (e.g., the connecting terminal 1278) may be omitted from the electronic device 1201, or one or more other components may be added in the electronic device 1201. In some embodiments, some of the components (e.g., the sensor module 1276, the camera module 1280, or the antenna module 1297) may be implemented as a single component (e.g., the display module 1260).

The processor 1220 may execute, for example, software (e.g., a program 1240) to control at least one other component (e.g., a hardware or software component) of the electronic device 1201 coupled with the processor 1220, and may perform various data processing or computation. According to an embodiment, as at least part of the data processing or computation, the processor 1220 may store a command or data received from another component (e.g., the sensor module 1276 or the communication module 1290) in volatile memory 1232, process the command or the data stored in the volatile memory 1232, and store resulting data in non-volatile memory 1234. According to an embodiment, the processor 1220 may include a main processor 1221 (e.g., a central processing unit (CPU) or an application processor (AP)), or an auxiliary processor 1223 (e.g., a graphics processing unit (GPU), a neural processing unit (NPU), an image signal processor (ISP), a sensor hub processor, or a communication processor (CP)) that is operable independently from, or in conjunction with, the main processor 1221. For example, when the electronic device 1201 includes the main processor 1221 and the auxiliary processor 1223, the auxiliary processor 1223 may be adapted to consume less power than the main processor 1221, or to be specific to a specified function. The auxiliary processor 1223 may be implemented as separate from, or as part of the main processor 1221.

The auxiliary processor 1223 may control at least some of functions or states related to at least one component (e.g., the display module 1260, the sensor module 1276, or the communication module 1290) among the components of the electronic device 1201, instead of the main processor 1221 while the main processor 1221 is in an inactive (e.g., sleep) state, or together with the main processor 1221 while the main processor 1221 is in an active state (e.g., executing an application). According to an embodiment, the auxiliary processor 1223 (e.g., an image signal processor or a communication processor) may be implemented as part of another component (e.g., the camera module 1280 or the communication module 1290) functionally related to the auxiliary processor 1223. According to an embodiment, the auxiliary processor 1223 (e.g., the neural processing unit) may include a hardware structure specified for artificial intelligence model processing. An artificial intelligence model may be generated by machine learning. Such learning may be performed, e.g., by the electronic device 1201 where the artificial intelligence is performed or via a separate server (e.g., the server 1208). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1230 may store various data used by at least one component (e.g., the processor 1220 or the sensor module 1276) of the electronic device 1201. The various data may include, for example, software (e.g., the program 1240) and input data or output data for a command related thereto. The memory 1230 may include the volatile memory 1232 or the non-volatile memory 1234.

The program 1240 may be stored in the memory 1230 as software, and may include, for example, an operating system (OS) 1242, middleware 1244, or an application 1246.

The input module 1250 may receive a command or data to be used by another component (e.g., the processor 1220) of the electronic device 1201, from the outside (e.g., a user) of the electronic device 1201. The input module 1250 may include, for example, a microphone, a mouse, a keyboard, a key (e.g., a button), or a digital pen (e.g., a stylus pen).

The sound output module 1255 may output sound signals to the outside of the electronic device 1201. The sound output module 1255 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1260 may visually provide information to the outside (e.g., a user) of the electronic device 1201. The display module 1260 may include, for example, a display, a hologram device, or a projector and control circuitry to control a corresponding one of the display, hologram device, and projector. According to an embodiment, the display module 1260 may include a touch sensor adapted to detect a touch, or a pressure sensor adapted to measure the intensity of force incurred by the touch.

The audio module 1270 may convert a sound into an electrical signal and vice versa. According to an embodiment, the audio module 1270 may obtain the sound via the input module 1250, or output the sound via the sound output module 1255 or a headphone of an external electronic device (e.g., an electronic device 1202) directly (e.g., wiredly) or wirelessly coupled with the electronic device 1201.

The sensor module 1276 may detect an operational state (e.g., power or temperature) of the electronic device 1201 or an environmental state (e.g., a state of a user) external to the electronic device 1201, and then generate an electrical signal or data value corresponding to the detected state. According to an embodiment, the sensor module 1276 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1277 may support one or more specified protocols to be used for the electronic device 1201 to be coupled with the external electronic device (e.g., the electronic device 1202) directly (e.g., wiredly) or wirelessly. According to an embodiment, the interface 1277 may include, for example, a high definition multimedia interface (HDMI), a universal serial bus (USB) interface, a secure digital (SD) card interface, or an audio interface.

A connecting terminal 1278 may include a connector via which the electronic device 1201 may be physically connected with the external electronic device (e.g., the electronic device 1202). According to an embodiment, the connecting terminal 1278 may include, for example, an HDMI connector, a USB connector, a SD card connector, or an audio connector (e.g., a headphone connector).

The haptic module 1279 may convert an electrical signal into a mechanical stimulus (e.g., a vibration or a movement) or electrical stimulus which may be recognized by a user via his tactile sensation or kinesthetic sensation. According to an embodiment, the haptic module 1279 may include, for example, a motor, a piezoelectric element, or an electric stimulator.

The camera module 1280 may capture a still image or moving images. According to an embodiment, the camera module 1280 may include one or more lenses, image sensors, image signal processors, or flashes.

The power management module 1288 may manage power supplied to the electronic device 1201. According to an embodiment, the power management module 1288 may be implemented as at least part of, for example, a power management integrated circuit (PMIC).

The battery 1289 may supply power to at least one component of the electronic device 1201. According to an embodiment, the battery 1289 may include, for example, a primary cell which is not rechargeable, a secondary cell which is rechargeable, or a fuel cell.

The communication module 1290 may support establishing a direct (e.g., wired) communication channel or a wireless communication channel between the electronic device 1201 and the external electronic device (e.g., the electronic device 1202, the electronic device 1204, or the server 1208) and performing communication via the established communication channel. The communication module 1290 may include one or more communication processors that are operable independently from the processor 1220 (e.g., the application processor (AP)) and supports a direct (e.g., wired) communication or a wireless communication. According to an embodiment, the communication module 1290 may include a wireless communication module 1292 (e.g., a cellular communication module, a short-range wireless communication module, or a global navigation satellite system (GNSS) communication module) or a wired communication module 1294 (e.g., a local area network (LAN) communication module or a power line communication (PLC) module). A corresponding one of these communication modules may communicate with the external electronic device via the first network 1298 (e.g., a short-range communication network, such as Bluetooth^{™}, wireless-fidelity (Wi-Fi) direct, or infrared data association (IrDA)) or the second network 1299 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1292 may identify and authenticate the electronic device 1201 in a communication network, such as the first network 1298 or the second network 1299, using subscriber information (e.g., international mobile subscriber identity (IMSI)) stored in the subscriber identification module 1296.

The wireless communication module 1292 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1292 may support a high-frequency band (e.g., the mmWave band) to achieve, e.g., a high data transmission rate. The wireless communication module 1292 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1292 may support various requirements specified in the electronic device 1201, an external electronic device (e.g., the electronic device 1204), or a network system (e.g., the second network 1299). According to an embodiment, the wireless communication module 1292 may support a peak data rate (e.g., 20Gbps or more) for implementing eMBB, loss coverage (e.g., 1264dB or less) for implementing mMTC, or U-plane latency (e.g., 0.5ms or less for each of downlink (DL) and uplink (UL), or a round trip of 12ms or less) for implementing URLLC.

The antenna module 1297 may transmit or receive a signal or power to or from the outside (e.g., the external electronic device) of the electronic device 1201. According to an embodiment, the antenna module 1297 may include an antenna including a radiating element composed of a conductive material or a conductive pattern formed in or on a substrate (e.g., a printed circuit board (PCB)). According to an embodiment, the antenna module 1297 may include a plurality of antennas (e.g., array antennas). In such a case, at least one antenna appropriate for a communication scheme used in the communication network, such as the first network 1298 or the second network 1299, may be selected, for example, by the communication module 1290 (e.g., the wireless communication module 1292) from the plurality of antennas. The signal or the power may then be transmitted or received between the communication module 1290 and the external electronic device via the selected at least one antenna. According to an embodiment, another component (e.g., a radio frequency integrated circuit (RFIC)) other than the radiating element may be additionally formed as part of the antenna module 1297.

According to various embodiments, the antenna module 1297 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1201 and the external electronic device 1204 via the server 1208 coupled with the second network 1299. Each of the electronic devices 1202 or 1204 may be a device of a same type as, or a different type, from the electronic device 1201. According to an embodiment, all or some of operations to be executed at the electronic device 1201 may be executed at one or more of the external electronic devices 1202, 1204, or 1208. For example, if the electronic device 1201 should perform a function or a service automatically, or in response to a request from a user or another device, the electronic device 1201, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1201. The electronic device 1201 may provide the outcome, with or without further processing of the outcome, as at least part of a reply to the request. To that end, a cloud computing, distributed computing, mobile edge computing (MEC), or client-server computing technology may be used, for example. The electronic device 1201 may provide ultra low-latency services using, e.g., distributed computing or mobile edge computing. In another embodiment, the external electronic device 1204 may include an internet-of-things (IoT) device. The server 1208 may be an intelligent server using machine learning and/or a neural network. According to an embodiment, the external electronic device 1204 or the server 1208 may be included in the second network 1299. The electronic device 1201 may be applied to intelligent services (e.g., smart home, smart city, smart car, or healthcare) based on 5G communication technology or IoT-related technology.

As described above, an electronic device 101 mat comprise a first antenna 191, a second antenna 192, a third antenna 193, a first radio frequency front end (RFFE) 141, connected to the first antenna 191, the first RFFE 141 including a duplexer 151 passing a first signal 111 in a downlink frequency range of a first frequency band, and a second signal 112 in an uplink frequency range of the first frequency band, a second RFFE 142 connected to the second antenna 192, the second RFFE 142 including a filter 161 passing the first signal 111, a third RFFE 143 connectable to the second antenna 192 or the third antenna 193, the third RFFE 143 including another duplexer 171 passing a third signal 113 in a downlink frequency range of a second frequency band, and a fourth signal 114 in an uplink frequency range of the second frequency band, and a processor 120. According to an embodiment, the processor 120 may be configured to connect the third RFFE 143 to the second antenna 192 from among the second antenna 192 and the third antenna 193 to transmit the fourth signal 114 while the second signal 112 is transmitted via the first antenna 191. According to an embodiment, the processor 120 may be configured to, while the third RFFE 193 is connected to the second antenna 192, identify a defined event. According to an embodiment, the processor 120 may be configured to, based on the defined event, connect the third RFFE 143 to the third antenna 193 from among the second antenna 192 and the third antenna 193 to transmit the fourth signal 114 while the second signal 112 is transmitted.

According to an embodiment, the processor 120 may be configured to receive the first signal 111 via the first antenna 191 connected to the first RFFE 141 and receive the first signal 111 via the second antenna 192 connected to the second RFFE 142.

According to an embodiment, the processor 120 may be configured to, while the third RFFE 143 is connected to the second antenna 192, receive the first signal 111 via the first antenna 191 connected to the first RFFE 141.

According to an embodiment, the electronic device 101 may comprise a switch 110 including a first terminal 121 connected to the second antenna 192, a second terminal 122 connected to the third antenna 193, and a third terminal 123 connected to the third RFFE 143. According to an embodiment, the processor 120 may be configured to connect the third RFFE 143 to the second antenna 192 by setting a state of the switch 110 as a first state connecting the third terminal 123 to the first terminal 121 from among the first terminal 121 and the second terminal 122. According to an embodiment, the processor 120 may be configured to connect the third RFFE 143 to the third antenna 193 by setting the state of the switch 110 as a second state connecting the third terminal 123 to the second terminal 122 from among the first terminal 121 and the second terminal 122.

According to an embodiment, the switch 110 may be located out of the first RFFE141, the second RFFE 142, and the third RFFE 143.

According to an embodiment, the electronic device 101 may comprise a radio frequency integrated circuit (RFIC) 180 including a reception chain 320 for the third signal 113 and another switch 310. According to an embodiment, the first RFFE 141 may comprise a filter 152 passing the third signal 113. According to an embodiment, the another switch 310 may include a first terminal connected to the filter 152 of the first RFFE 141, a second terminal connected via a low noise amplifier (LNA) 173 of the third RFFE 143 to the another duplexer 171, and a third terminal connected to the reception chain 320.

According to an embodiment, the processor 120 may be configured to, while the state of the switch 110 is the first state, set a state of the another switch 310 connecting the third terminal of the another switch 310 to the first terminal of the another switch 310 from among the first terminal and the second terminal of the another switch 310. According to an embodiment, the processor 120 may be configured to, while the state of the switch 110 is the second state, set the state of the another switch 310 connecting the third terminal of the another switch 310 to the second terminal of the another switch 310 from among the first terminal and the second terminal of the another switch 310.

According to an embodiment, the another switch 310 may be located in the RFIC 180 or may be located out of the RFIC 180.

According to an embodiment, the electronic device 101 may comprise a first housing 400 including a first surface 401, a second surface 402 opposite to the first surface 401, and a third surface 403 between the first surface 401 and the second surface 402, a second housing 450 including a fourth surface 454, a fifth surface 455 opposite to the fourth surface 454, and a sixth surface 456 between the fourth surface 454 and the fifth surface 455, a hinge structure for changing an angle between the first housing 400 and the second housing 450 based on a reference axis 495, and a flexible display 440 disposed on the first surface 401 and the fourth surface 454 across the hinge structure, the flexible display including a display area that includes a first periphery 441 perpendicular to the reference axis 495, a second periphery 442, extending from an end of the first periphery 441, parallel to the reference axis 495, a third periphery 443, extending from an end of the second periphery 442, perpendicular to the reference axis 495, and parallel to the first periphery 441, and a fourth periphery 444, extending from an end of the third periphery 443 to another end of the first periphery 441, parallel to the reference axis 495. According to an embodiment, the third surface 403 may include a first area 601, disposed along a portion of the first periphery 441, including a first non-conductive portion 611, a second area 602, disposed along the second periphery 442, including a second non-conductive portion 612, and a third area 603, disposed along a portion of the third periphery 443, including a third non-conductive portion 613 and a fourth non-conductive portion 614 spaced apart from the third non-conductive portion 613. According to an embodiment, the sixth surface 456 may include a fourth area 604, disposed along another portion of the first periphery 441, including a fifth non-conductive portion 615, a fifth area 605, disposed along the fourth periphery 444, including a sixth non-conductive portion 615, and a sixth area 606 disposed along another portion of the third periphery 443. According to an embodiment, the first non-conductive portion 611 and the fifth non-conductive portion 615 may be symmetrical with respect to the reference axis 495. According to an embodiment, the second non-conductive portion 612 and the sixth non-conductive portion 616 may be symmetrical with respect to the reference axis 495. According to an embodiment, the sixth surface 456 may include a conductive portion 642, extending from the fifth non-conductive portion 615 to the sixth non-conductive portion 616, functioning as the first antenna 191. According to an embodiment, the third surface may include a first conductive portion 631, extending from the third non-conductive portion 613 to the fourth non-conductive portion 614, functioning as the second antenna 192, and a second conductive portion 632, extending from the first non-conductive portion 611 to the second non-conductive portion 612, functioning as the third antenna 193.

According to an embodiment, the third surface 403 may include a seventh non-conductive portion 617 in the first area 601 spaced apart from the first non-conductive portion 611 and a third conductive portion 633 extending from the first non-conductive portion 611 to the seventh non-conductive portion 617. According to an embodiment, the sixth surface 456 may include an eighth non-conductive portion in the fourth area 604 spaced apart from the fifth non-conductive portion 615, a ninth non-conductive portion 619 in the sixth area 606, a tenth non-conductive portion 620 in the sixth area 606 spaced apart from the ninth non-conductive portion 619, a conductive portion 643 extending from the fifth non-conductive portion 615 to the eighth non-conductive portion 618, and a conductive portion 641 extending from the ninth non-conductive portion 619 to the tenth non-conductive portion 620.

According to an embodiment, the defined event may comprise identifying an external object positioned within a defined distance from the electronic device 101, identifying that a quality of a signal received via the second antenna 192 is lower than a reference quality, identifying that data indicating change of a posture of the electronic device corresponds to reference data, and/or identifying that an angle between a first direction 411 in which the first surface 401 faces and a second direction 412 in which the second surface 454 faces is changed.

According to an embodiment, each of the first frequency band and the second frequency band may be a frequency band lower than 1 giga hertz GHz.

As described above, an electronic device 101 may comprise a first antenna 191, a second antenna 192, a third antenna 193, a first radio frequency front end, RFFE 141, connected to the first antenna 191, the first RFFE 141 including a duplexer passing a first signal in a downlink frequency range of a first frequency band, and a second signal in an uplink frequency range of the first frequency band, a second RFFE 142 connected to the second antenna 192, the second RFFE 142 including a filter passing the first signal and a filter passing a third signal in a downlink frequency range of a second frequency band, a third RFFE 143 connectable to the second antenna 192 or the third antenna 193, the third RFFE 143 including a filter passing a fourth signal in an uplink frequency range of the second frequency band, and a processor 120. According to an embodiment, the processor 120 may be configured to connect the third RFFE 143 to the second antenna 192 from among the second antenna 192 and the third antenna 193 to transmit the fourth signal 114 while the second signal 112 is transmitted via the first antenna 191. According to an embodiment, the processor 120 may be configured to, while the third RFFE 143 is connected to the second antenna 192, identify a defined event. According to an embodiment, the processor 120 may be configured to, based on the defined event, connect the third RFFE 143 to the third antenna 193 from among the second antenna 192 and the third antenna 193 to transmit the fourth signal 114 while the second signal 112 is transmitted.

According to an embodiment, the processor 120 may be configured to, while the third RFFE 143 is connected to the third antenna 193, receive the first signal 111 via the second antenna 192 connected to the second RFFE 142.

According to an embodiment, the electronic device 101 may comprise a switch 110 including a first terminal 121 connected to the second antenna 192, a second terminal 122 connected to the third antenna 193, and a third terminal 123 connected to the third RFFE 143. According to an embodiment, the processor 120 may be configured to connect the third RFFE 143 to the second antenna 192 by setting a state of the switch 110 as a first state connecting the third terminal 123 to the first terminal 121 from among the first terminal 121 and the second terminal 122. According to an embodiment, the processor 120 may be configured to connect the third RFFE 143 to the third antenna 193 by setting the state of the switch 110 as a second state connecting the third terminal 123 to the second terminal 122 from among the first terminal 121 and the second terminal 122.

According to an embodiment, the switch 110 may be located out of the first RFFE 141, the second RFFE 142, and the third RFFE 143.

As described above, an electronic device 101 may comprise a first antenna 191, a second antenna 192, a third antenna 193, a first radio frequency front end (RFFE) 141, connected to the first antenna 191, the first RFFE 141 including a duplexer passing a first signal in a downlink frequency range of a first frequency band, and a second signal in an uplink frequency range of the first frequency band, a second RFFE 142 connected to the second antenna 192, the second RFFE 142 including a filter passing a fourth signal in an uplink frequency range of a second frequency band, a third RFFE 143 connectable to the second antenna 192 or the third antenna 193, the third RFFE 143 including a filter passing the first signal and a filter passing a third signal in a downlink frequency range of the second frequency band, and a processor 120. According to an embodiment, the processor 120 may be configured to connect the third RFFE 143 to the second antenna 192 from among the second antenna 192 and the third antenna 193 to receive the first signal 111 or the third signal 113 while the first signal 111 is received via the first antenna 191 or the second signal 112 is transmitted via the first antenna 191. According to an embodiment, the processor 120 may be configured to, while the third RFFE 143 is connected to the second antenna 192, identify the defined event. According to an embodiment, the processor 120 may be configured to, based on the defined event, connect the third RFFE 143 to the third antenna 193 from among the second antenna 192 and the third antenna 193.

According to an embodiment, the processor 120 may be configured to connect the third RFFE 143 to the third antenna 193 to receive the first signal 111 while the fourth signal 114 is transmitted via the second antenna 192 connected to the second RFFE 142.

According to an embodiment, the electronic device 101 may include a switch 111 including a first terminal 121 connected to the second antenna 192, a second terminal 122 connected to the third antenna 193, and a third terminal 123 connected to the third RFFE 143. According to an embodiment, the processor 120 may be configured to connect the third RFFE 143 to the second antenna 192, by setting a state of the switch 110 to a first state connecting the third terminal 123 to the first terminal 121 from among the first terminal 121 and the second terminal 122. According to an embodiment, the processor 120 may be configured to connect the third RFFE 143 to the third antenna 193 by setting the state to a second state connecting the third terminal 123 to the second terminal 122 from among the first terminal 121 and the second terminal 122.

According to an embodiment, the switch 110 may be located out of the first RFFE 141, the second RFFE 142, and the third RFFE 143.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1240) including one or more instructions that are stored in a storage medium (e.g., internal memory 1236 or external memory 1238) that is readable by a machine (e.g., the electronic device 1201). For example, a processor (e.g., the processor 1220) of the machine (e.g., the electronic device 1201) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a first antenna (191);
a second antenna (192);
a third antenna (193);
a first radio frequency front end, RFFE (141), connected to the first antenna (191), the first RFFE (141) including a duplexer (151) passing:
a first signal (111) in a downlink frequency range of a first frequency band, and
a second signal (112) in an uplink frequency range of the first frequency band;
a second RFFE (142) connected to the second antenna (192), the second RFFE (142) including a filter (161) passing the first signal (111);
a third RFFE (143) connectable to the second antenna (192) or the third antenna (193), the third RFFE (143) including another duplexer (171) passing:
a third signal (113) in a downlink frequency range of a second frequency band, and
a fourth signal (114) in an uplink frequency range of the second frequency band; and
a processor (120) configured to:
connect the third RFFE (143) to the second antenna (192) from among the second antenna (192) and the third antenna (193) to transmit the fourth signal (114) while the second signal (112) is transmitted via the first antenna (191);
while the third RFFE (143) is connected to the second antenna (192), identify a defined event; and
based on the defined event, connect the third RFFE (143) to the third antenna (193) from among the second antenna (192) and the third antenna (193) to transmit the fourth signal (114) while the second signal (112) is transmitted.

2. The electronic device (101) of claim 1, wherein the processor (120) is further configured to:
while the third RFFE (143) is connected to the third antenna (193):
receive the first signal (111) via the first antenna (191) connected to the first RFFE (141), and
receive the first signal (111) via the second antenna (192) connected to the second RFFE (142).

3. The electronic device (101) of any one of the preceding claims, wherein the processor (120) is further configured to:
while the third RFFE (143) is connected to the second antenna (192), receive the first signal (111) via the first antenna (191) connected to the first RFFE (141).

4. The electronic device (101) of any one of the preceding claims, further comprising:
a switch (110) including:
a first terminal (121) connected to the second antenna (192),
a second terminal (122) connected to the third antenna (193), and
a third terminal (123) connected to the third RFFE (143),
wherein the processor (120) is configured to:
connect the third RFFE (143) to the second antenna (192) by setting a state of the switch (110) as a first state connecting the third terminal (123) to the first terminal (121) from among the first terminal (121) and the second terminal (122); and
connect the third RFFE (143) to the third antenna (193) by setting the state of the switch (110) as a second state connecting the third terminal (123) to the second terminal (122) from among the first terminal (121) and the second terminal (122).

5. The electronic device (101) of any one of the preceding claims, wherein the switch (110) is located out of the first RFFE(141), the second RFFE (142), and the third RFFE (143).

6. The electronic device (101) of any one of the preceding claims, comprising:
radio frequency integrated circuitry, RFIC, (180) including a reception chain (320) for the third signal (113); and
another switch (310),
wherein the first RFFE (141) further comprises a filter (152) passing the third signal (113), and
wherein the another switch (310) includes:
a first terminal connected to the filter (152) of the first RFFE (141),
a second terminal connected via a low noise amplifier, LNA, (173) of the third RFFE (143) to the another duplexer (171), and
a third terminal connected to the reception chain (320).

7. The electronic device (101) of any one of the preceding claims, wherein the processor is further configured to:
while the state of the switch (110) is the first state, set a state of the another switch (310) connecting the third terminal of the another switch (310) to the first terminal of the another switch (310) from among the first terminal and the second terminal of the another switch (310); and
while the state of the switch (110) is the second state, set the state of the another switch (310) connecting the third terminal of the another switch (310) to the second terminal of the another switch (310) from among the first terminal and the second terminal of the another switch (310).

8. The electronic device (101) of any one of the preceding claims, wherein the another switch (310) is located in the RFIC (180) or is located out of the RFIC (180).

9. The electronic device (101) of any one of the preceding claims, further comprising:
a first housing (400) including a first surface (401), a second surface (402) opposite to the first surface (401), and a third surface (403) between the first surface (401) and the second surface (402);
a second housing (450) including a fourth surface (454), a fifth surface (455) opposite to the fourth surface (454), and a sixth surface (456) between the fourth surface (454) and the fifth surface (455);
a hinge structure for changing an angle between the first housing (400) and the second housing (450) based on a reference axis (495); and
a flexible display (440) disposed on the first surface (401) and the fourth surface (454) across the hinge structure, the flexible display including a display area that includes:
a first periphery (441) perpendicular to the reference axis (495),
a second periphery (442), extending from an end of the first periphery (441), parallel to the reference axis (495),
a third periphery (443), extending from an end of the second periphery (442), perpendicular to the reference axis (495), and parallel to the first periphery (441), and
a fourth periphery (444), extending from an end of the third periphery (443) to another end of the first periphery (441), parallel to the reference axis (495),
wherein the third surface (403) includes:
a first area (601), disposed along a portion of the first periphery (441), including a first non-conductive portion (611),
a second area (602), disposed along the second periphery (442), including a second non-conductive portion (612), and
a third area (603), disposed along a portion of the third periphery (443), including a third non-conductive portion (613) and a fourth non-conductive portion (614) spaced apart from the third non-conductive portion (613),
wherein the sixth surface (456) includes:
a fourth area (604), disposed along another portion of the first periphery (441), including a fifth non-conductive portion (615),
a fifth area (605), disposed along the fourth periphery (444), including a sixth non-conductive portion (615), and
a sixth area (606) disposed along another portion of the third periphery (443),
wherein the first non-conductive portion (611) and the fifth non-conductive portion (615) are symmetrical with respect to the reference axis (495),
wherein the second non-conductive portion (612) and the sixth non-conductive portion (616) are symmetrical with respect to the reference axis (495),
wherein the sixth surface (456) further includes a conductive portion (642), extending from the fifth non-conductive portion (615) to the sixth non-conductive portion (616), functioning as the first antenna (191), and
wherein the third surface further includes:
a first conductive portion (631), extending from the third non-conductive portion (613) to the fourth non-conductive portion (614), functioning as the second antenna (192), and
a second conductive portion (632), extending from the first non-conductive portion (611) to the second non-conductive portion (612), functioning as the third antenna (193).

10. The electronic device (101) of any one of the preceding claims, wherein the third surface (403) further includes a seventh non-conductive portion (617) in the first area (601) spaced apart from the first non-conductive portion (611) and a third conductive portion (633) extending from the first non-conductive portion (611) to the seventh non-conductive portion (617), and
wherein the sixth surface (456) further includes:
an eighth non-conductive portion in the fourth area (604) spaced apart from the fifth non-conductive portion (615),
a ninth non-conductive portion (619) in the sixth area (606),
a tenth non-conductive portion (620) in the sixth area (606) spaced apart from the ninth non-conductive portion (619),
a conductive portion (643) extending from the fifth non-conductive portion (615) to the eighth non-conductive portion (618), and
a conductive portion (641) extending from the ninth non-conductive portion (619) to the tenth non-conductive portion (620).

11. The electronic device (101) of any one of the preceding claims, wherein the defined event comprises:
identifying an external object positioned within a defined distance from the electronic device (101),
identifying that a quality of a signal received via the second antenna (192) is lower than a reference quality,
identifying that data indicating change of a posture of the electronic device corresponds to reference data, and/or
identifying that an angle between a first direction (411) in which the first surface (401) faces and a second direction (412) in which the second surface (454) faces is changed.

12. The electronic device (101) of any one of the preceding claims, wherein the first frequency band and the second frequency band are a frequency band lower than 1 giga hertz (GHz).

13. A method executed in an electronic device that includes a first antenna (191), a second antenna (192), a third antenna (193), a first radio frequency front end, RFFE, (141) connected to the first antenna (191), the first RFFE (141) including a duplexer (151) passing a first signal (111) in a downlink frequency range of a first frequency band and a second signal (112) in an uplink frequency range of the first frequency band, a second RFFE (142) connected to the second antenna (192), the second RFFE (142) including a filter (161) passing the first signal (111), and a third RFFE (143) connectable to the second antenna (192) or the third antenna (193), the third RFFE (143) including another duplexer (171) passing a third signal (113) in a downlink frequency range of a second frequency band and a fourth signal (114) in an uplink frequency range of the second frequency band, the method comprising:
connecting the third RFFE (143) to the second antenna (192) from among the second antenna (192) and the third antenna (193) to transmit the fourth signal (114) while the second signal (112) is transmitted via the first antenna (191);
while the third RFFE (143) is connected to the second antenna (192), identifying a defined event; and
based on the defined event, connecting the third RFFE (143) to the third antenna (193) from among the second antenna (192) and the third antenna (193) to transmit the fourth signal (114) while the second signal (112) is transmitted.

14. The method of claim 13, further comprising:
while the third RFFE (143) is connected to the third antenna (193):
receiving the first signal (111) via the first antenna (191) connected to the first RFFE (141), and
receiving the first signal (111) via the second antenna (192) connected to the second RFFE (142).

15. The method of any one of claims 13 and 14, further comprising:
while the third RFFE (143) is connected to the second antenna (192), receiving the first signal (111) via the first antenna (191) connected to the first RFFE (141).
